# EUROPÄISCHE PATENTSCHRIFT

(11) **EP 2 175 401 B1**
(45) Veröffentlichungstag und Bekanntmachung des Hinweises auf die Patenterteilung: **02.11.2011**
(21) Anmeldenummer: 08166450.0
(22) Anmeldetag: 13.10.2008
(51) Int. Cl.: G06K 19/077

(54) **Transponder**
Transponder
Transpondeur

(43) Veröffentlichungstag der Anmeldung: 14.04.2010
(73) Patentinhaber: STEAG Energy Services GmbH, 45128 Essen (DE)
(72) Erfinder: Offermann, Wolfgang, 45257 Essen (DE); Stephan, Dr. Martin, 47445 Moers (DE)
(74) Vertreter: Viering, Jentschura & Partner

(56) Entgegenhaltungen:
- US-A1- 2001 020 935
- US-A1- 2006 163 348
- US-A1- 2007 247 333
- US-A1- 2008 157 925

## Beschreibung

Die Erfindung betrifft insbesondere einen Transponder, ein den Transponder aufweisendes Kommunikationssystem sowie ein das Kommunikationssystem aufweisendes Informationssystem.

Transponder sind Funk-Kommunikationsgeräte, welche immer öfter Verwendung zur Identifizierung von verschiedensten Objekten finden. Verglichen mit herkömmlichen Strichkodemustern, die ebenfalls zur Identifizierung verwendet werden, weisen Transponder eine größere Speicherkapazität auf. Transponder sind so ausgelegt, dass Daten per Funk auf den Transponder übertragen und aus diesem ausgelesen werden können. Mittlerweile sind Transponder von verschiedenen Herstellern erhältlich und können in einem gemischten Betrieb mit anderen Geräten eingesetzt werden, da sie aufgrund ihrer Standardisierung kompatibel sind. Jeder einzelne Transponder erhält üblicherweise während seiner Herstellung eine eindeutige, unveränderliche und auslesbare Kennung in Form einer Transponder-Identifizierungsinformationseinheit, so dass keine zwei Transponder mit der gleichen Transponder-Identifizierungsinformationseinheit existieren. Durch Aufbringen eines Transponders können somit beliebige Objekte eindeutig identifiziert werden. Auf dem Transponder gespeicherte Informationen sind jedoch für den Menschen unsichtbar gespeichert und somit für das menschliche Auge nicht lesbar.

Aufgrund dessen wird der Einsatz von Transpondern in Kraftwerken und vielen großtechnischen Anlagen zur Unterstützung und Erleichterung verschiedenster Prozesse von Instandsetzungsarbeiten sowie Instandhaltungsmaßnahmen mit Skepsis betrachtet.

US-A-2001/0020935 offenbart labels with optisch Anzeigeeinheit.

Ein Großteil der Instandsetzungsarbeiten sowie Instandhaltungsmaßnahmen von großtechnischen Anlagen wird durch einen Prozess der sogenannten Freischaltung einer Komponente vor Beginn der Arbeiten und Maßnahmen sowie vor der Wiederzuschaltung der Komponente nach Abschluss der Arbeiten begleitet. Unter Freischaltung wird im Allgemeinen die Herstellung einer Spannungsfreiheit an elektrischen Anlagen oder Komponenten verstanden und umfasst auch die gegebenenfalls manuelle Ausführung von Schalthandlungen an mechanischen Anlagen, wie zum Beispiel die Betätigung von Handarmaturen. Insbesondere vor Arbeitsbeginn von Instandsetzungsarbeiten sowie Instandhaltungsmaßnahmen muss die Freischaltung der Komponente fehlerfrei ausgeführt werden, damit die sichere Durchführung der Arbeiten vor Ort, d.h. an der Komponente, gewährleistet ist. Bei Wiederzuschaltung der Komponente ist sicherzustellen, dass auch parallel durchgeführte Arbeiten an dieser Komponente insgesamt beendet wurden, bevor die Komponente zugeschaltet wird.

Dieser Prozess der Freischaltung wird seit längerem durch ein computergestütztes Verfahren unterstützt, welches die Planung und Ausführung von Freischaltvorgängen einzelner Komponenten sowie ganzer verfahrenstechnischer Systeme durch Erstellung von auf Papier ausgegebenen Freischalt-Listen mit einzelnen Freischaltschritten verwaltet. Beispielhafte Tätigkeiten zur Ausführung eines einzelnen Freischaltschritts sind das manuelle Schließen eines mechanischen Ventils oder das Stoppen eines elektrischen Motors mit anschließender Entfernung der Sicherung, um eine versehentliche Wiederzuschaltung zu verhindern. Die Freischaltschritte werden anhand des Freischaltplans in der großtechnischen Anlage durchgeführt, vor Ort durch Anbringung von Klebeetiketten, Schildern, Markierungen oder dergleichen optisch kenntlich gemacht und auf der Freischalt-Liste durch Unterschrift als durchgeführt bestätigt. Wenn alle zu einer Komponente gehörenden Freischaltschritte durchgeführt wurden und dies anhand der Freischalt-Liste überprüft wurde, kann eine Freigabe zur Durchführung von Instandsetzungsarbeiten sowie Instandhaltungsmaßnahmen an der entsprechenden Komponente unter Gewährleistung eines sicheren Arbeitsplatzes erfolgen. Die Instandsetzungsarbeiten sowie Instandhaltungsmaßnahmen selbst sind ebenfalls anhand einer Liste durchzuführen und zu bestätigen. Erst nach Überprüfung, ob alle durchzuführenden Arbeiten und Maßnahmen abgeschlossen sind, kann die entsprechende Komponente wieder zugeschaltet werden. Die Wiederzuschaltung (die sogenannte Normalisierung) der Komponente erfolgt anhand der Freischalt-Liste, die abzuarbeiten ist. Dies umfasst auch die Entfernung der angebrachten Klebeetiketten, Schilder, Markierungen oder dergleichen. Hiermit ist der Freischalvorgang abgeschlossen.

In großtechnischen Anlagen ist es aber keine Seltenheit, dass mehrere Freischaltschritte an einer Komponente der Anlage gleichzeitig aktiv sind und darüber hinaus Freischaltschritte mehrerer aktiver Freischaltpläne die gleiche technische Komponente betreffen. Die Freischaltung dieser einzelnen Komponente ist in diesem Falle solange sicher zu stellen, solange auch nur eine der gleichzeitig erfolgenden Arbeiten noch andauert. Vor dem Durchführen der Normalisierung ist infolge dessen zu prüfen, ob eine oder mehrere in den Freischaltschritten dieses Vorgangs aufgeführte Komponenten in anderen aktiven Freischaltvorgängen enthalten sind. Sollte das der Fall sein, muss dieser Schritt von der Normalisierung ausgeschlossen werden. Diese Aufgabe ist schwierig und potentiell fehleranfällig, da jeder Freischaltschritt gegen jeden Freischaltschritt aller anderen aktiven Freischaltpläne geprüft werden muss. Der Einsatz eines vorstehend angesprochenen computergestützten Verfahrens zur Konflikterkennung steigert zwar die Zuverlässigkeit der Prüfung erheblich, dehnt aber eine computergestützte Freischaltung bis an den eigentlichen Ort der Freischaltung nicht aus, so dass eine Aufhebung der Freischaltung einer Komponente trotz genauer Vorgaben aufgrund eines menschlichen Fehlers erfolgen kann.

Darüber hinaus ist es möglich, dass die Freischaltung für eine falsche Komponente aufgehoben wird, weil eine die Freischaltung anzeigende Beschriftung oder Markierung an der Komponente nicht vorhanden, unleserlich oder ungenau ist. Eine weitere Fehlerquelle, die zu einer Aufhebung der Freischaltung einer Komponente führen kann, birgt eine papierbezogene Auswertung eines Freischaltplans infolge des Übersehens noch aktiver Freischaltzustände, so dass eine einzelne Komponente fälschlicherweise normalisiert, d.h. zu- bzw. eingeschaltet, wird. Eine weitere Gefahr einer nicht erwünschten Aufhebung der Freischaltung ist dadurch gegeben, dass eine diesbezüglich an der Komponente oder an einer Schaltstelle dieser Komponente angebrachte Markierung abgefallen oder unkenntlich ist oder versehentlich entfernt wurde.

Der Erfindung liegt die Aufgabe zugrunde, eine Lösung zu schaffen, durch die die vorstehend genannten Nachteile sowie Gefahren vermieden werden, und durch die eine Erhöhung der Arbeitssicherheit erzielt wird.

Diese Aufgabe wird gelöst von einem Transponder gemäß Anspruch 1.

Die vorstehende Aufgabe wird auch von einem Kommunikationssystem mit einem erfindungsgemäßen Transponder und einer Schreib-Lese-Einheit, in der zumindest eine Zustands-/Betriebsinformationseinheit und zumindest eine Identifizierungsinformationseinheit speicherbar ist, gelöst, wobei jeder Identifizierungsinformationseinheit wenigstens eine Zustands-/Betriebsinformationseinheit zugeordnet ist, von der Schreib-Lese-Einheit die Transponder-Identifizierungsinformationseinheit aus dem Speicherelement des Transponders auslesbar ist und die Schreib-Lese-Einheit in Abhängigkeit der ausgelesenen Transponder-Identifizierungsinformationseinheit zumindest eine Zustands-/Betriebsinformationseinheit von der Schreib-Leseeinheit auf den Transponder übertragen kann.

Ebenso wird die vorstehende Aufgabe von einem Informationssystem mit einem erfindungsgemäßen Transponder , einem erfindungsgemäßen Kommunikations-System und einem zentralen EDV-System, gelöst, wobei zumindest die in der Schreib-Lese-Einheit gespeicherten Zustands-/Betriebsinformationseinheiten von dem zentralen EDV-System aus der Schreib-Lese-Einheit auslesbar sind, und in der Schreib-Leseeinheit zu speichernde Zustands-/Betriebsinformationseinheiten von dem zentralen EDV-System auf die Schreib-Lese-Einheit übertragbar sind.

Darüber hinaus wird die vorstehende Aufgabe auch durch die Verwendung eines erfindungsgemäßen Transponders oder durch die Verwendung eines erfindungsgemäßen Kommunikationssystems oder durch die Verwendung eines erfindungsgemäßen Informationssystems zur optisch erfassbaren Anzeige von zumindest einem Teil einer in den Zustands-/Betriebsinformationseinheiten enthaltenden Information einer Komponente einer großtechnischen Anlage, insbesondere eines Kraftwerks, gelöst, wobei der Transponder an oder in der Nähe der Komponente oder an einer dieser Komponente zugeordneten Schalt- oder Messstelle angeordnet ist.

Schließlich wird die vorstehende Aufgabe auch von einem Verfahren zum Betreiben eines einen erfindungsgemäßen Transponder aufweisenden Informationssystems gelöst, wobei über das Empfangselement in dem Speicherelement zumindest eine Zustands-/Betriebsinformationseinheit gespeichert wird und auf der optischen Anzeigeeinheit zumindest ein Teil der in den Zustands-/Betriebsinformationseinheiten enthaltenen Information dargestellt wird.

Vorteilhafte und zweckmäßige Ausgestaltungen und Weiterbildungen der Erfindung ergeben sich aus den entsprechenden abhängigen Unteransprüchen.

Durch die Erfindung ist es möglich, die beispielsweise bei einer Instandsetzung und/oder Instandhaltung einer Komponente erforderlichen Arbeiten und Maßnahmen bis an die entsprechende Komponente computerunterstützt zu begleiten. Die auf dem Transponder gespeicherten Informationen, die veränderlich sind, werden darüber hinaus auf der optischen Anzeigeeinheit für das menschliche Auge optisch erfassbar, sichtbar und lesbar gemacht. Durch die optische Anzeigeeinheit ist somit ein Anbringen von Klebeetiketten, Schildern, Markierungen oder dergleichen nicht mehr notwendig, wodurch der Anbringungs- und Entfernungsaufwand entfällt und Zeit und Kosten reduziert werden. Ferner wird durch die Erfindung das Risiko einer fehlerhaften Maßnahme bei Instandsetzungsarbeiten sowie Instandhaltungsmaßnahmen an einer Komponente vermieden und damit die Arbeitssicherheit erhöht. Der Einsatz der Erfindung, wie beispielsweise beim Prozess der Freischaltung, bietet somit aufgrund einer eindeutigen Identifizierung einer Komponente, einer Speicherung von Komponenten spezifischen Informationen in Form von Zustands-/Betriebsinformationseinheiten und einer optisch erfassbaren Anzeige direkt an der betreffenden Komponente von in den Zustands-/Betriebsinformationseinheiten enthaltenen Informationen neben technisch-wirtschaftlichen Vorteilen auch eine Steigerung der Zuverlässigkeit in der Ausführung und einen wesentlichen Zugewinn an Arbeits- und Produktionssicherheit.

Um einer an einer Komponente einer Anlage arbeitenden Person eine möglichst konkrete und schnell erfassbare Information bezüglich des Betriebszustandes der Komponente zu geben, sieht die Erfindung in Ausgestaltung vor, dass die optische Anzeigeeinheit lediglich die Anzahl der Zustands-/Betriebsinformationseinheiten, nicht jedoch die Zustands-/Betriebsinformationseinheit selbst darstellt. Dadurch kann beispielsweise beim Prozess der Freischaltung eindeutig erkannt werden, dass bei zwei auf der optischen Anzeigeeinheit dargestellten aktiven Freischaltungen keine Normalisierung, d.h. keine Wiederzuschaltung, der Komponente erfolgen darf, auch wenn dies der Freischaltschritt vorsieht.

Zweckmäßiger Weise ist in vorteilhafter Weiterbildung der Erfindung bei einer Anzahl der Zustands-/Betriebsinformationseinheiten größer Null mittels des Steuerelements ein Warnsignal auf der optischen Anzeigeeinheit einblendbar. Dadurch wird im Fall einer aktiven Freischaltung eine optisch erfassbare Warnmeldung ausgegeben, die beispielsweise eine Graphik sein kann, um deutlich auf die Freischaltung aufmerksam zu machen.

In einer besonders bevorzugten Ausführungsform der vorliegenden Erfindung ist die Anzeigeeinheit eine Anzeige auf Basis von elektronischer Tinte mit bistabilen Anzeigelementen. Dabei handelt es sich chemisch um Mikrokapseln, die zwei verschiedene Farbkomponenten unterschiedlicher Ladung enthalten, welche sich im elektrischen Feld ausrichten. Aufgrund der Partikelgrößen und der Viskosität des Systems erfolgt nach dem Abschalten des elektrischen Feldes keine sofortige Rückrelaxation in einen ungeordneten Ausgangszustand und somit kein Verlust der auf der Anzeigeeinheit eingeschriebenen Informationen, sondern es tritt gegebenenfalls lediglich eine Abnahme des Kontrasts ein. Dadurch ist eine Darstellung von Informationen auf der Anzeigeeinheit gewährleistet, selbst wenn der Transponder sich in einem spannungslosen Zustand befindet. Darüber hinaus ist keine Energiequelle zum Betrieb der optischen Anzeigeeinheit notwendig. Als Beispiele für elektronische Tinte sei auf die Produkte der Firmen Gyricon und E-Ink Cooperation verwiesen. Bei diesen Produkten von elektrophoretischen Anzeigeeinheiten handelt es sich um Mikrokapseln, die geladene Farbstoffpartikel enthalten. Die Einzelpartikel sind jedoch farblos und kleiner als bei anderen elektronischen Tinten. Diese elektrophoretischen Anzeigeeinheiten sind flexibel, stoßunempfindlich und druckstabil. Ferner ist durch die vergleichsweise niedrige Ansteuerungsspannung der schaltungstechnische Aufwand für die Energieversorgung begrenzt.

Alternativ können aber auch andere Anzeigetechnologien für die Anzeigeeinheit zum Einsatz kommen, wobei hier auf die bekannten Technologien FLCD (Ferroeletric Liquid Crystal Display), EASL (Electrically Adressable Smetic Liquid Display), ZBD (Zenithal Bistable Devices), CHLCD (Cholestreric Liquid Crystal Display) und OLED (Organic Light Emitting Diode) verwiesen sei, die näher in der Druckschrift WO 2006/012997 beschrieben sind.

In Weiterbildung der Erfindung ist vorgesehen, dass die auf der Anzeigeeinheit dargestellte Information zumindest ein alphanumerisches Zeichen und/oder zumindest eine Graphik umfasst. Beispielsweise ist durch die Darstellung von alphanumerischen Zeichen ist ein Ablesen von konkreten Informationen möglich, wohingegen eine Graphik zur Erhöhung der Aufmerksamkeit verwendet werden kann.

Nach einer Weiterbildung der Erfindung ist der Transponder ein passiver Transponder, der seine benötigte Energie aus einem gesendeten Signal, das beispielsweise von einer zum Transponder kompatiblen Schreib-Lese-Einheit ausgesendet wird, bezieht. Dadurch ist es möglich, dass der Transponder seine zur Funktion benötigte Energie allein von der Schreib-Lese-Einheit erhält und bezieht. Gegenüber einem aktiven Transponder hat dies den Vorteil, dass keine Energiequelle, wie beispielsweise eine Batterie, zum Betrieb des Transponders benötigt wird.

Der Transponder kann beispielsweise ein RFID-Transponder sein, der eine Betriebsfrequenz von 13,56 MHz aufweist, wodurch eine berührungslose Identifizierung und Lokalisierung des Transponders mit Hilfe elektromagnetischer Wellen möglich ist. Dadurch können ferner Daten auf dem Transponder berührungslos ein- und ausgelesen werden, wobei die Sende- und Empfangsquelle bis auf etwa 3 cm, vorzugsweise 2 cm bis 6 cm, an den Transponder heran gebracht werden muss. Die kurze Entfernung ist deshalb von besonderer Bedeutung, da beispielsweise mehrere Transponder, die entsprechenden Komponenten einer großtechnischen Anlage zugeordnet sind, dicht nebeneinander liegend auf einer Schalttafel angeordnet sein können und nur durch einen definierten Abstand zwischen der Sende- und Empfangsquelle und dem Transponder eine eindeutige Identifikation des Transponders möglich ist.

Im Hinblick auf einen Einsatz in großtechnischen Anlagen, insbesondere Kraftwerken, ist es von besonderem Vorteil, wenn die in dem Speicherelement speicherbaren Zustands-/Betriebsinformationseinheiten jeweils eine Information hinsichtlich eines Zu- oder Abschaltungszustands der Komponente und/oder einer zuletzt durchgeführten Wartung der Komponente und/oder einer zuletzt durchgeführten behördlichen Prüfung der Komponente und/oder einer zuletzt durchgeführten Messwertaufnahme der Komponente umfassen.

In Ausgestaltung des erfindungsgemäßen Kommunikationssystems ist vorgesehen, dass der Inhalt der wenigstens einen Zustands-/Betriebsinformationseinheit, die in der Schreib-Lese-Einheit gespeichert ist, vor der Übertragung auf den Transponder von einem Benutzer der Schreib-Lese-Einheit veränderbar ist. Insbesondere bei der Wiederzuschaltung ist dies zweckmäßig, da der Benutzer zunächst die Komponente normalisiert, d.h. wiederzuschaltet, und dies anschließend auf der Schreib-Lese-Einheit bestätigt, so dass der Status der entsprechenden Zustands-/Betriebsinformationseinheit aktualisiert werden kann.

Damit der Benutzer der Schreib-Lese-Einheit erkennt, dass er die Maßnahme auch an der richtigen Komponente durchführt, sieht die Erfindung in Weiterbildung vor, dass die Schreib-Lese-Einheit dazu ausgelegt ist, die vom Transponder ausgelesene Transponder-Identifizierungsinformationseinheit mit der zumindest einen in der Schreib-Lese-Einheit gespeicherten Identifizierungsinformationseinheit zu vergleichen.

In weiterer Ausgestaltung des erfindungsgemäßen Kommunikationssystems ist vorgesehen, dass bei Übereinstimmung des Inhalts der Transponder-Identifizierungsinformationseinheit und einer Identifizierungsinformationseinheit die Schreib-Lese-Einheit im Transponder gespeicherte Zustands-/Betriebsinformationseinheiten ausliest, und/oder eine der Identifizierungsinformationseinheit zugeordnete, in der Schreib-Lese-Einheit gespeicherte Zustands-/Betriebsinformationseinheit von der Schreib-Lese-Einheit auf den Transponder überträgt. Dadurch kann beispielsweise bei dem Prozess der Freischaltung mittels der Schreib-Lese-Einheit festgestellt werden, ob weitere Freischaltungsschritte, die in Form der Zustands-/Betriebsinformationseinheiten auf dem Transponder gespeichert sind, für die entsprechende Komponente aktiv sind, wobei der von dem Benutzer durchzuführende Freischaltungsschritt ferner auf dem Transponder der Liste der dort gespeicherten Freischaltungsschritte in Form einer Zustands-/Betriebsinformationseinheit hinzugefügt werden kann.

Bei mehreren auf dem Transponder gespeicherten Freischaltschritten sieht die Erfindung in Weiterbildung vor, dass bei einer Anzahl der vom Transponder ausgelesenen Zustands-/Betriebsinformationseinheiten von größer Null die Schreib-Lese-Einheit eine Warnmeldung ausgibt. Dadurch wird der Benutzer der Schreib-Lese-Einheit konkret auf einen möglichen Konflikt von Freischaltungsschritten hingewiesen.

Nach der Normalisierung, d.h. Zuschaltung, einer Komponente ist es notwendig, dass der entsprechende auf dem Transponder gespeicherte Freischaltschritt aus dem Speicherelement des Transponders entfernt wird. Hierzu sieht die Erfindung in Ausgestaltung vor, dass bei Übereinstimmung des Inhalts der Transponder-Identifizierungsinformationseinheit und einer Identifizierungsinformationseinheit die Schreib-Lese-Einheit ein Steuersignal an den Transponder sendet, welches das Steuerelement dazu veranlasst, eine im Speicherelement gespeicherte Zustands-/Betriebsinformationseinheit zu löschen.

Nach einer Weiterbildung des Kommunikationssystems ist die Schreib-Lese-Einheit ein mobiler tragbarer Computer in Form eines handgehaltenen PDAs (Personal Digital Assistant) oder eines Laptops. Alternativ kann die Schreib-Lese-Einheit auch als ein Mobiltelefon ausgebildet sein, welche die gleiche Funktionalität wie ein PDA oder Laptop aufweist. Dies hat den Vorteil, dass der Benutzer die Schreib-Lese-Einheit bequem mit sich führen und an unterschiedlichen Orten der großtechnischen Anlage verwenden kann. Die Speicherleistung heutiger Mobil-Computer ermöglicht eine umfängliche Informationssammlung für die unterschiedlichsten Komponenten und durchzuführenden Arbeiten. Durch die Verwendung eines derartigen mobilen Computers steigt der Komfort für den Benutzer und die Arbeitssicherheit erheblich an. Die Integrierung einer Leseeinrichtung für Transponder in einen derartigen mobilen Computer ist dabei heutzutage weitestgehend bekannt und daher einfach und kostengünstig durchzuführen.

In Ausgestaltung des erfindungsgemäßen Informationssystems ist vorgesehen, dass das zentrale EDV-System dazu ausgelegt ist, von der Schreib-Lese-Einheit ausgelesene Zustands-/Betriebsinformationseinheiten zu verarbeiten, insbesondere mit in dem EDV-System gespeicherten Zustands-/Betriebsinformationseinheiten zu vergleichen. Dabei werden sowohl die im EDV-System als auch in der Schreib-Lese-Einheit gespeicherten Zustands-/Betriebsinformationseinheiten einem Datenabgleich bzw. einem bidirektionalem Synchronisationsvorgang unterzogen. Damit ist sichergestellt, dass dem EDV-System immer die aktuellsten Informationen über die Komponenten der Anlage vorliegen, so dass das EDV-System Freischaltlisten entweder in Vorbereitung geplanter Maßnahmen oder aber auch ad hoc im Falle einer Anlagenstörung erzeugen kann.

In Weiterbildung des erfindungsgemäßen Verfahrens ist vorgesehen, dass auf der optischen Anzeigeeinheit lediglich die Anzahl der Zustands-/Betriebsinformationseinheiten, nicht jedoch die Zustands-/Betriebsinformationseinheit selbst dargestellt wird. Damit wird einer Person eine möglichst konkrete und schnell erfassbare Information bezüglich des Betriebszustandes einer Komponente gegeben. Dadurch kann beispielsweise beim Prozess der Freischaltung eindeutig erkannt werden, dass bei zwei auf der optischen Anzeigeeinheit dargestellten aktiven Freischaltungen keine Normalisierung, d.h. keine Wiederzuschaltung, der Komponente erfolgen darf, auch wenn dies der Freischaltschritt vorsieht. Weiterhin wird die Person dazu gezwungen, wenn auf alle im Transponder gespeicherte Information zugegriffen werden soll, eine Schreib-Lese-Einheit zu verwenden.

Zweckmäßiger Weise wird in vorteilhafter Weiterbildung des Verfahrens bei einer Anzahl der Zustands-/Betriebsinformationseinheiten größer Null mittels des Steuerelements ein Warnsignal auf der optischen Anzeigeeinheit eingeblendet. Dadurch wird beispielsweise im Fall einer aktiven Freischaltung eine optisch erfassbare Warnmeldung ausgegeben, die beispielsweise eine Graphik sein kann, um deutlich auf die Freischaltung aufmerksam zu machen.

In weiterer Ausgestaltung des Verfahrens ist vorgesehen, dass von einer Schreib-Lese-Einheit die über das Empfangselement empfangene und in dem Speicherelement gespeicherte Zustands-/Betriebsinformationseinheit in Form eines Signals übertragen wird, und die Schreib-Lese-Einheit zur Übertragung des Signals in den frequenzabhängigen Empfangs-/Sendebereich des Transponders, vorzugsweise bis auf 3 bis 6 cm an den Transponder heran, gebracht wird. Dadurch ist eine eindeutige Identifizierung des Transponders und ein berührungsloses Ein- und Auslesen von auf dem Transponder gespeicherten Daten möglich.

Zweckmäßiger Weise ist in Weiterbildung des Verfahrens vorgesehen, dass vor dem Übertragen des Signals von der Schreib-Lese-Einheit die dauerhaft im Transponder gespeicherte Transponder-Identifizierungsinformationseinheit aus diesem ausgelesen wird und die Transponder-Identifizierungsinformationseinheit mit einer in der Schreib-Lese-Einheit gespeicherten Identifizierungsinformationseinheit verglichen wird. Dadurch wird sichergestellt, dass die auf den Transponder zu übertragende Zustands-/Betriebsinformationseinheit auch auf den richtigen Transponder übertragen wird.

Weiterhin sieht die Erfindung in Ausgestaltung des Verfahrens vor, dass von der Schreib-Lese-Einheit bei Übereinstimmung von Transponder-Identifizierungsinformationseinheit und Identifizierungsinformationseinheit im Transponder gespeicherte Zustands-/Betriebsinformationseinheiten ausgelesen werden und bei einer Anzahl der ausgelesenen Zustands-/Betriebsinformationseinheiten von größer Null eine Warnmeldung von der Schreib-Lese-Einheit ausgegeben wird. Dadurch wird beispielsweise im Fall einer aktiven Freischaltung dem Benutzer eine wahrnehmbare und gegebenenfalls optisch erfassbare Warnmeldung angezeigt, um die Aufmerksamkeit des Benutzers hinsichtlich des festgestellten Konflikts zu erhöhen.

Zweckmäßiger Weise sieht das Verfahren weiterhin vor, dass bei Übereinstimmung von Transponder-Identifizierungsinformationseinheit und Identifizierungsinformationseinheit eine in der Schreib-Lese-Einheit gespeicherte und der Identifizierungsinformationseinheit zugeordnete Zustands-/Betriebsinformationseinheit einem Verarbeitungsschritt unterzogen wird, bei dem der Status dieser Zustands-/Betriebsinformationseinheit geändert wird, bevor ein die geänderte Zustands-/Betriebsinformationseinheit beinhaltendes Signal an den Transponder übertragen wird. Insbesondere bei der Wiederzuschaltung ist dies erforderlich, da der Benutzer zunächst die Komponente normalisiert, d.h. wiederzuschaltet, und dies anschließend auf der Schreib-Lese-Einheit bestätigt, so dass der Status der entsprechenden Zustands-/Betriebsinformationseinheit aktualisiert werden kann.

Nach der Normalisierung, d.h. Zuschaltung, einer Komponente ist es notwendig, dass der entsprechende auf dem Transponder gespeicherte Freischaltschritt aus dem Speicherelement des Transponders entfernt wird. Hierzu sieht die Erfindung in Ausgestaltung des Verfahrens vor, dass bei Übereinstimmung von Transponder-Identifizierungsinformationseinheit und Identifizierungsinformationseinheit von der Schreib-Lese-Einheit ein Steuersignal an den Transponder gesendet wird, durch welches eine im Speicherelement gespeicherte Zustands-/Betriebsinformationseinheit von der Steuereinheit gelöscht wird.

In weiterer Ausgestaltung des Verfahrens sieht die Erfindung vor, dass nach dem Speichern der gesendeten Zustands-/Betriebsinformationseinheit von der optischen Anzeige lediglich die aktuelle Anzahl der im Transponder gespeicherten Zustands-/Betriebsinformationseinheiten, nicht jedoch die Zustands-/Betriebsinformationseinheit selbst dargestellt wird. Dadurch kann beispielsweise beim Prozess der Freischaltung eindeutig dargestellt werden, dass bei zwei auf der optischen Anzeigeeinheit dargestellten aktiven Freischaltungen keine Normalisierung, d.h. keine Wiederzuschaltung, der Komponente erfolgen darf, auch wenn dies der Freischaltschritt vorsieht.

Damit überhaupt Zustands-/Betriebsinformationseinheiten und damit Informationen auf den Transponder übertragbar sind, sieht das Verfahren in Ausgestaltung vor, dass vor Übertragung des Signals an den Transponder von einem zentralen EDV-System zumindest eine Zustands-/Betriebsinformationseinheit an die Schreib-Lese-Einheit übertragen wird.

Schließlich sieht die Erfindung in Weiterbildung des Verfahrens vor, dass nach der Übertragung des Signals an den Transponder die geänderte Zustands-/Betriebsinformationseinheit, die in der Schreib-Lese-Einheit gespeichert ist, von dem zentralen EDV-System ausgelesen wird. Damit wird eine zentrale Daten- und Informationshaltung über den Betriebszustand der einzelnen Komponenten realisiert.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand von Ausführungsbeispielen unter Bezugnahme auf die zugehörigen Zeichnungen näher erläutert. Es zeigt:
- Fig. 1: eine schematische Darstellung eines Informationssystems, bestehend aus Transponder, Schreib-Lese-Einheit und EDV-System,
- Fig. 2: eine Darstellung eines Transponders nach dessen Initialisierung,
- Fig. 3: eine Darstellung eines Transponders, auf dessen optischer Anzeigeeinheit eine Freischaltung einer Komponente angezeigt wird,
- Fig. 4: eine Darstellung eines Transponders, auf dessen optischer Anzeigeeinheit zwei Freischaltungen einer Komponente angezeigt werden,
- Fig. 5: eine Darstellung eines Transponders, auf dessen optischer Anzeigeeinheit ein Zeitpunkt einer zuletzt durchgeführten Wartungsmaßnahme angezeigt wird,
- Fig. 6: eine Darstellung eines Transponders, auf dessen optischer Anzeigeeinheit ein Zeitpunkt einer zuletzt durchgeführten Abnahmeprüfung angezeigt wird, und
- Fig. 7: eine Darstellung eines Transponders, auf dessen optischer Anzeigeeinheit ein Zeitpunkt einer zuletzt durchgeführten Messprotokollierung angezeigt wird.

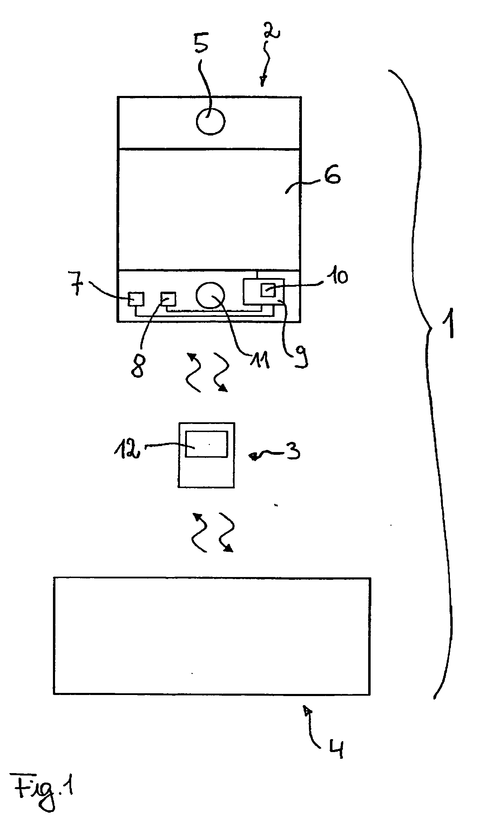

Die Fig. 1 zeigt schematisch ein in seiner Gesamtheit mit Bezugsziffer 1 bezeichnetes Informationssystem, welches einen Transponder 2, eine mobile Schreib-Lese-Einheit 3 und ein EDV-System 4 umfasst. Die sich aus der Darstellung ergebenden Größenverhältnisse zwischen Transponder 2, mobiler Schreib-Lese-Einheit 3 und EDV-System 4 entsprechen nicht notwendigerweise den wirklichen Relationen.

Der Transponder 2 weist eine in Form eines Lochs ausgebildete Öffnung 5 auf, durch die ein Befestigungselement hindurch steckbar ist, um den Transponder 2 an einer Komponente einer großtechnischen Anlage dauerhaft anbringen zu können. Neben mechanischen Befestigungsmöglichkeiten, die durch die Öffnung 5 gegeben ist, kann der Transponder 2 auch mit einer Seitenfläche, die einer optischen Anzeigeeinheit 6 des Transponders 2 abgewandt ist, auf und/oder an der Komponente der Anlage mittels eines Klebemittels oder dergleichen angebracht werden.

Der in Form eines dünnen Plättchens ausgebildete Transponder 2 (das Plättchen kann starr oder biegsam ausgestaltet sein) weist ferner ein Empfangselement 7, ein Sendeelement 8 und ein Steuerelement 9 auf. Das Steuerelement 9 ist mit dem Empfangselement 7, dem Sendeelement 8 und der optischen Anzeigeeinheit 6 verbunden und umfasst ein Speicherelement 10. In dem Speicherelement 10 ist eine bei der Herstellung des Transponders 2 erzeugte einmalige Kennung in Form einer Transponder-Identifizierungsinformationseinheit, die eine Nummer sein kann, dauerhaft gespeichert. Neben der Transponder-Identifizierungsinformationseinheit sind in dem Speicherelement 10 mehrere Zustands-/Betriebsinformationseinheiten, die eine dem Transponder zugeordnete Komponente betreffen, speicherbar. Dabei umfasst jede Zustands-/Betriebsinformationseinheit der entsprechenden Komponente zugewiesene Informationen, wie beispielsweise deren Komponentenbezeichnung (Pumpenaggregat), deren Lage innerhalb der großtechnischen Anlage, eine Kurzbeschreibung in Form einer Bedienungsanleitung, technischen Daten und dergleichen. Diese Informationen werden auch als Stammdaten der Komponente bezeichnet. Darüber hinaus kann die jeweilige Zustands-/Betriebsinformationseinheit eine Information über eine an der Komponente durchzuführende Maßnahme enthalten. Diese Maßnahme kann beispielsweise eine Information hinsichtlich eines Zu- oder Abschaltungszustands der Komponente und/oder einer zuletzt durchgeführten Wartung der Komponente und/oder einer zuletzt durchgeführten behördlichen Prüfung der Komponente und/oder einer zuletzt durchgeführten Messwertaufnahme der Komponente umfassen.

Über das Sendeelement 8 werden die Transponder-Identifizierungsinformationseinheit und die Zustands-/Betriebsinformationseinheiten aus dem Speicherelement 10 von einem zum Transponder 2 kompatiblen Gerät gelesen. Ferner werden Zustands-/Betriebsinformationseinheiten über das Empfangselement 7 dem Speicherelement 10 zugeführt.

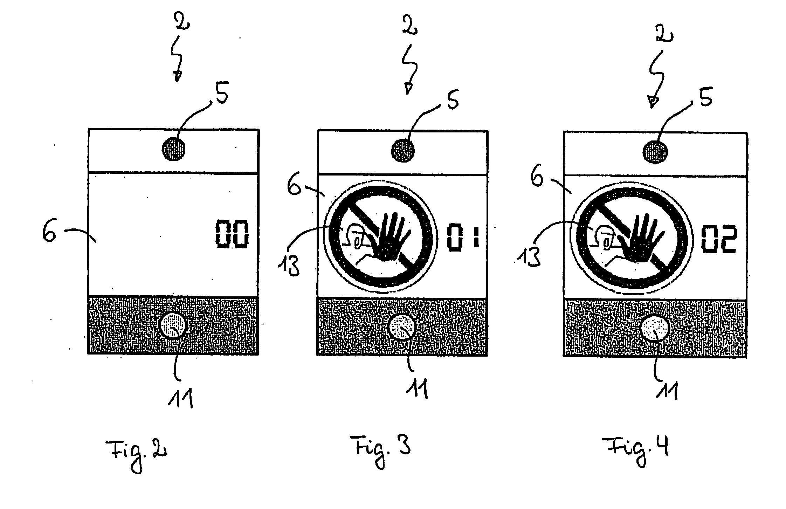

Die optische Anzeigeeinheit 6 des Transponders 2 ist eine Anzeige auf Basis von elektronischer Tinte mit bistabilen Anzeigeelementen, wobei die darauf dargestellte Information oder die dargestellten Informationen alphanumerische Zeichen und eine Graphik umfassen, wie in Fig. 3 zu sehen ist. Die optische Anzeigeeinheit 6 stellt somit einen Teil der in den Zustands-/Betriebsinformationseinheiten enthaltenen Informationen dar. Alternativ kann die optische Anzeigeeinheit 2 auf Basis einer anderen Technologie als die der elektronischen Tinte ausgeführt sein.

Der in dieser Ausführungsform dargestellte Transponder 2 weist ferner eine Ausnehmung 11 auf. Ein Kommunikationsvorgang des Transponders 2 mit einem kompatiblen Gerät beginnt dann, wenn ein Schreib-Lese-Stift dieses Geräts bis auf unter 3 cm an den Transponder 2 heran gebracht wird. Die Ausnehmung dient dabei lediglich als Hilfe, um den Schreib-Lese-Stift aufsetzen zu können, so dass eine Kommunikation zwischen dem Transponder 2 und dem kompatiblen Gerät gewährleistet ist.

Alternativ kann die Ausnehmung auch bei einer kapazitiven Kopplung zwischen Transponder 2 und dem kompatiblen Gerät dazu verwendet werden, mittels Elektroden der Schaltung des Transponders elektrische Energie aus dem elektrischen Feld des kompatiblen Geräts zuzuführen.

Die vorstehend genannten Elemente des Transponders 2 stellen die Basiselemente für seine Funktion dar und sind nicht abschließend zu verstehen. Optional kann der Transponder 2 zusätzlich einen Mirkoprozessor aufweisen, so dass der Transponder 2 programmierbar ist und empfangene Zustands-/Betriebsinformationseinheiten auswerten und verarbeiten kann. Der in diesem Ausführungsbeispiel verwendete Transponder 2 ist ein passiver Transponder, der seine benötigte Energie aus einem gesendeten Signal bezieht. Alternativ kann aber auch ein aktiver Transponder verwendet werden, der allerdings eine eigene Energiequelle (z.B. eine Batterie oder eine Solarzelle) zum Betrieb benötigt. Hinsichtlich einer weiteren Alternative kann der Transponder 2 auch ein RFID-Transponder sein, der eine Betriebsfrequenz von 13,56 MHz aufweist, wodurch eine berührungslose Identifizierung und Lokalisierung des Transponders mit Hilfe elektromagnetischer Wellen möglich ist.

Als ein zu dem Transponder 2 kompatibles Gerät kommen verschiedenste Schreib-Lese-Einheiten 3 in Frage, die als mobile tragbare Computer in Form von handgehaltenen PDAs oder Laptops ausgebildet sind. Diese Geräte sind im Allgemeinen aufgrund ihrer Standardisierung zu einem wie hier beschriebenen Transponder 2 kompatibel. Die als ein mobiler Computer ausgebildete Schreib-Lese-Einheit 3 weist eine Anzeigevorrichtung 12 zur Darstellung von Informationen oder zur Anzeige der Zustands-/Betriebsinformationseinheiten auf und wird von einem Benutzer bei durchzuführenden Maßnahmen an Komponenten einer großtechnischen Anlage mit sich geführt. Mittels eines auf der Schreib-Lese-Einheit 3 ausführbaren Computerprogramms können auf der Schreib-Lese-Einheit 3 gespeicherte Zustands-/Betriebsinformationseinheiten verwaltet und deren Status von dem Benutzer der Schreib-Lese-Einheit 3 verändert werden.

Zwischen dem Transponder 2 und der Schreib-Lese-Einheit 3 findet ein wie durch die Pfeile in Fig. 1 angedeuteter Informationsaustausch statt, so dass beide ein Kommunikationssystem bilden. Zum Informationsaustausch mit dem Transponder 2 ist zumindest eine Zustands-/Betriebsinformationseinheit und zumindest eine Identifizierungsinformationseinheit in der Schreib-Lese-Einheit 3 gespeichert, wobei jeder Identifizierungsinformationseinheit wenigstens eine Zustands-/Betriebsinformationseinheit einer Komponente zugeordnet ist. Zum Informationsaustausch oder Kommunikation mit dem Transponder 2 wird von der Schreib-Lese-Einheit die Transponder-Identifizierungsinformationseinheit aus dem Speicherelement 10 des Transponders 2 ausgelesen. Im Fall, dass die Transponder-Identifizierungsinformationseinheit und die Identifizierungsinformationseinheit übereinstimmen, wird von der Schreib-Lese-Einheit 3 die zur Identifizierungsinformationseinheit zugehörige Zustands-/Betriebsinformationseinheit auf den Transponder 2 übertragen. Vor der Übertragung auf den Transponder 2 kann ein Benutzer den Inhalt der in der Lese-Schreib-Einheit 3 gespeicherten Zustands-/Betriebsinformationseinheit verändern, so dass der Transponder 2 eine aktualisierte Zustands-/Betriebsinformationseinheit empfängt. Die Aktualisierung bezieht sich dabei auf eine an der Komponente durchgeführte Maßnahme, die beispielsweise eine Freischaltung oder eine Wiederzuschaltung sein kann. Die Schreib-Lese-Einheit 3 liest ferner bei Übereinstimmung des Inhalts der Transponder-Identifizierungsinformationseinheit und der Identifizierungsinformationseinheit auch die im Transponder gespeicherte Zustands-/Betriebsinformationseinheiten aus. Im Fall eines Freischaltungsvorgangs ist es möglich, dass die Anzahl der ausgelesenen Zustands-/Betriebsinformationseinheiten größer Null ist, was bedeutet, dass für die vorliegende Komponente mehrere Freischaltungen vorliegen. In diesem Fall erhält der Benutzer der Schreib-Lese-Einrichtung 3 eine Warnmeldung, die ihn auf diesen Konflikt aufmerksam macht und ihm zu verstehen gibt, dass die Komponente auf keinen Fall wieder zugeschaltet werden darf. Zusätzlich sendet in diesem Fall die Schreib-Lese-Einheit 3 ein Steuersignal an den Transponder 2, welches das Steuerelement 9 dazu veranlasst, die im Speicherelement 10 gespeicherte Zustands-/Betriebsinformationseinheit, die zu der Identifizierungsinformationseinheit zugehörig ist, zu löschen.

Damit auf der Schreib-Lese-Einheit 3 überhaupt Zustands-/Betriebsinformationseinheiten, die auf den Transponder 2 zu übertragen sind, vorliegen, werden im Vorfeld der an einer Komponente durchzuführenden Maßnahme und der damit verbundene Informationsaustausch zwischen Transponder 2 und Schreib-Lese-Einheit 3 entsprechende Zustands-/Betriebsinformationseinheiten von dem zentralen EDV-System 4 auf die Schreib-Lese-Einheit 3 übertragen. Innerhalb des zentralen EDV-Systems 4 ist der Schaltplan der großtechnischen Anlage in einer Datenbank hinterlegt, der von einem Computerprogramm verwaltet wird. In der Datenbank des Systems ist der Freischaltort der Komponente mit der eindeutigen Identifizierungsinformationseinheit des Transponders 2 verknüpft. Das zentrale EDV-System 4 übernimmt beispielsweise bei einem Prozess der Freischaltung die Planung von Freischaltvorgängen einzelner Komponenten sowie ganzer verfahrenstechnischer Systeme durch Erstellung von Freischalt-Listen mit einzelnen Freischaltschritten. Die Freischaltschritte entsprechen den Zustands-/Betriebsinformationseinheiten, die nach der Planung und Erstellung der Freischalt-Liste auf die Schreib-Lese-Einheit 3 übertragen werden. Nach Abarbeitung der Liste werden die in der Schreib-Lese-Einheit gespeicherten Zustands-/Betriebsinformationseinheiten vom zentralen EDV-System 4 ausgelesen und verarbeitet, wobei die ausgelesenen Zustands-/Betriebsinformationseinheiten mit in dem EDV-System 4 gespeicherten Zustands-/Betriebsinformationseinheiten verglichen werden. Nicht durchgeführte Maßnahmen werden dabei von dem EDV-System 4 erkannt und zur erneuten Durchführung in eine entsprechende Liste aufgenommen und zu einem späteren Zeitpunkt abgearbeitet.

Nachstehend wird exemplarisch die Ausstattung einer Komponente einer großtechnischen Anlage sowie ein exemplarischer Freischalt- und Zuschaltprozess beschrieben, bei dem der Transponder 2, das aus Transponder 2 und Schreib-Lese-Einheit 3 bestehende Kommunikationssystem sowie das aus Transponder 2, Schreib-Lese-Einheit 3 und zentralem EDV-System 4 bestehende Informationssystem 1 verwendet werden.

Vor dem Einsatz des Informationssystems 1 in einer großtechnischen Anlage wird im Rahmen einer Vorbereitungsmaßnahme an sämtlichen Komponenten der großtechnischen Anlage, die möglicherweise im Rahmen einer Freischaltung betätigt werden sollen, jeweils ein Transponder 2 mit einer optischen Anzeige 5 fest angebracht. Mithilfe der mobilen Schreib-Lese-Einheit 3, auf der eine EDV-Anwendung zur Unterstützung des Verfahrens einer Freischaltung durchgeführt wird, wird eine Transponder-Identifizierungsinformationseinheit des Transponders 2 ausgelesen und diese eindeutige und unveränderliche Identifizierungskennung anderen Informationen dieser Komponente, wie beispielsweise eine Komponentenbezeichnung (Pumpenaggregat), eine Ortsbezeichnung in der Anlage, eine Kurzbeschreibung in Form einer Bedienungsanleitung, technischen Daten und dergleichen, die auch Stammdaten genannt werden, zugeordnet. Bei dieser Vorbereitungsmaßnahme wird zudem die Datenhaltung auf dem Transponder 2 initialisiert, in dem eine Liste von Zustands-/Betriebsinformationseinheiten gelöscht wird. Die Zustands-/Betriebsinformationseinheiten enthalten jeweils eine Identifizierungsinformationseinheit, die beispielsweise eine Nummer ist, und eine Information, die beispielsweise einen Zu- oder Abschaltungszustand der Komponente angibt. Darüber hinaus können die Zustands-/Betriebsinformationseinheiten auch die Stammdaten der entsprechenden Komponente beinhalten. Den Abschluss der Initialisierung stellt der Transonder 2 durch Anzeige der Ziffern "00" auf der optischen Anzeigeeinheit 5 lesbar dar, wie in Fig. 2 dargestellt ist. Durch die Ziffern "00" wird dem Personal der großtechnischen Anlage angezeigt, dass diese Komponente zugeschaltet ist, d.h. dass keine Freischaltung der Komponente vorliegt.

Nach Abschluss der Vorbereitungsmaßnahme und damit der Zuordnung der jeweiligen Transponder-Identifizierungsinformationseinheiten zu den entsprechenden Komponenten werden die jeweiligen Informationseinheiten von der mobilen Schreib-Lese-Einheit 3 zum zentralen EDV-System 4 übertragen und dort gespeichert.

Als Ergebnis der Vorbereitungsmaßnahme wird im zentralen EDV-System 4 ein Anlagenplan erstellt, bei dem jeder Komponente eine eindeutige Identifizierungsinformationseinheit bzw. eine Transponder-Identifizierungsinformationseinheit zugewiesen ist.

Ein durchzuführender Freischaltungsprozess einer Komponente kann grob in drei Abschnitte unterteilt werden. In einem ersten Schritt wird ein sogenannter Freischaltplan erstellt, dem in einem zweiten Schritt die Durchführung der Freischaltung folgt, worauf hin in einem abschließenden dritten Schritt die Wiederzuschaltung folgt. Bei einer durchzuführenden Freischaltung einer Komponente der großtechnischen Anlage wird mittels des EDV-Systems 4 ein Freischaltplan und/oder eine Freischaltliste mit einem oder mehreren Freischaltschritten erzeugt, wobei jedem einzelnen Freischaltschritt eine eindeutige Identifizierungsinformationseinheit und Transponder-Identifizierungsinformationseinheit zugewiesen ist. Jeder einzelne Freischaltschritt wird als eine Zustands-/Betriebsinformationseinheit im EDV-System 4 erzeugt und in die Freischaltliste aufgenommen.

Zur Unterstützung des Prozesses der Freischaltung wird die Freischaltungsliste mit den im EDV-System 4 erzeugten Zustands-/Betriebsinformationseinheiten, die jeweils die Identifizierungsinformationseinheit, die zur Identifizierungsinformationseinheit zugehörigen Stammdaten einer Komponente sowie die durchzuführende Maßnahme an der Komponente beinhalten, auf zumindest eine mobile Schreib-Lese-Einheit 3 übertragen. Eine mögliche Aufteilung der Freischaltungsliste kann hierbei nach unterschiedlichen Gesichtspunkten erfolgen. Üblich ist eine Trennung von mechanischer und elektrischer Freischaltung, weil für diese beiden Maßnahmen Personen mit unterschiedlichen Qualifikationen erforderlich sind und meist auch nur von diesen durchgeführt werden darf.

Auf der Anzeige 12 der mobilen Schreib-Lese-Einheit 3 wird die Freischaltliste mit allen durchzuführenden Freischaltschritten angezeigt, die einer Person zugewiesen sind. In geeigneter Weise, beispielsweise durch einen Farbumschlag oder ein Symbol, werden bereits durchgeführte Freischaltschritte auf der Anzeige 12 der Schreib-Lese-Einheit 3 kenntlich gemacht. Darüber hinaus werden auf der Anzeige 12 die Stammdaten einer jeweiligen Komponente angezeigt oder können durch Benutzerinteraktion dargestellt werden. Eine Onlineverbindung der mobilen Schreib-Lese-Einheit 3 mit dem zentralen EDV-System 4 ist nicht erforderlich, kann aber optional, beispielsweise per WLAN, erfolgen. Da ein Empfang in großtechnischen Anlagen jedoch nicht überall sicher gestellt werden kann, ist in erster Linie ein autarker Betrieb (ohne Onlineverbindung) der mobilen Schreib-Lese-Einheit 3 vorgesehen.

Bei Erreichen einer frei zuschaltenden Komponente der großtechnischen Anlage hält der Benutzer die Schreib-Lese-Einheit 3 in die Nähe des Transponders 2, der an der Komponente oder in deren Nähe oder aber an einer diesbezüglichen Schaltstelle befestigt ist. Durch Vergleich der aus dem Transponder 2 ausgelesenen Transponder-Identifizierungsinformationseinheit mit den in der Freischaltliste gespeicherten Identifizierungsinformationseinheiten, denen jeweils ein entsprechender Freischaltschritt zugeordnet ist, wird automatisch der korrekte Freischaltschritt aufgeblendet oder im Fehlerfalle eine Meldung angezeigt, wenn diese Komponente zu keinem Freischaltschritt gehört.

Nachdem sich der Benutzer der Schreib-Lese-Einheit 3 auf diese Weise überzeugt hat, dass er an der richtigen Komponente ist, schaltet er diese frei. Die Freischaltung der Komponente kann beispielsweise durch Drücken eines Schalters oder Drehen einer Kurbel erfolgen. Die Durchführung der Freischaltmaßnahme bestätigt der Benutzer durch Betätigen einer Schaltfläche auf der mobilen Schreib-Lese-Einheit 3. Anschließend wird die Schreib-Lese-Einheit 3 an den Transponder 2 der Komponente herangebracht, so dass die Schreib-Lese-Einheit 3 eine Zustands-/Betriebsinformationseinheit auf den Transponder 2 überträgt und die Zustands-/Betriebsinformationseinheit gegebenenfalls in eine dortige Liste der im Transponder 2 gespeicherten Freischaltplannummern abspeichert. Der Transponder 2 legt diese Zustands-/Betriebsinformationseinheit dauerhaft in seinem Speicherelement 10 ab. Als Reaktion auf die Datenübertragung blendet der Transponder 2 mit der optischen Anzeigeeinheit 5 zudem ein auffälliges Symbol 13 auf und zeigt die Anzahl gleichzeitig aktiver Freischaltvorgänge als Zahl an. Demzufolge wird in Fig. 3 ein aktiver Freischaltvorgang angezeigt, wohingegen in Fig. 4 zwei aktive Schaltvorgänge angezeigt werden. Diese Informationen sind somit jedem optisch zugänglich und es ist hierfür keine Schreib-Lese-Einheit 3 notwendig. Eine Darstellung der Freischaltplannummern auf der Anzeige wird in der Regel nicht erfolgen, so dass ein Auslesen dieser Liste weiterhin nur über die Schreib-Lese-Einheit 3 möglich ist.

Nach Abschluss der Freischaltungen werden die Bestätigungen von der mobilen Schreib-Lese-Einheit 3 an das zentrale EDV-System 4 übertragen. Eine komplette Abarbeitung der auf der Schreib-Lese-Einheit 3 gespeicherten Freischaltliste ist wünschenswert, aber nicht notwendig. Das zentrale EDV-System 4 übernimmt die Bestätigungen der Freischaltschritte von mehreren mobilen Schreib-Lese-Einheiten 3 und stellt den zusammengeführten Statuts der Freischaltvorgänge dar. Noch nicht erfolgte Freischaltschritte werden somit zuverlässig erkannt und können erneut einer mobilen Schreib-Lese-Einheit 3 zugewiesen werden. Erst wenn das zentrale EDV-System 4 die Durchführung aller Freischaltschritte eines Freischaltplans meldet, kann eine Arbeitsfreigabe für die Komponente erteilt werden.

Sobald die Arbeiten, die zu einem Freischaltplan gehören, als beendet gemeldet werden, kann der Freischaltplan im EDV-System 4 zur Normalisierung ausgewählt werden und in gleicher Weise wie für die Freischaltung auf ein oder mehrere mobile Schreib-Lese-Einheiten 3 übertragen werden.

Bei Erreichen der zu normalisierenden Komponente wird die Schreib-Lese-Einheit 3 in die Nähe des Transponders 2 gebracht, der an der Komponente befestigt ist. Bei diesem Vorgang liest die mobile Schreib-Lese-Einheit 3 die Transponder-Identifizierungsinformationseinheit aus dem Speicherelement 10 des Transponders 2 und die Liste der Freischaltplannummern, die auf dem Transponder 2 in Form von Zustands-/Betriebsinformationseinheiten gespeichert sind. Durch Vergleich der ausgelesenen Transponder-Identifizierungsinformationseinheit mit den bei den Freischaltschritten gespeicherten Identifizierungsinformationseinheiten wird der korrekte Freischaltschritt mittels einer auf der Schreib-Lese-Einheit 3 installierten EDV-Anwendung herausgesucht und angezeigt. Im Fehlerfalle, d.h. wenn diese Komponente zu keinem Freischaltschritt gehört, wird eine Meldung auf der Anzeige 12 der Schreib-Lese-Einheit 3 angezeigt. Die Anwendung auf der mobilen Schreib-Lese-Einheit 3 überprüft im nächsten Schritt, ob die Liste der Freischaltplannummern ausschließlich die Nummer des zu normalisierenden Freischaltplanes enthält. Sollte dies nicht der Fall sein, wird eine auffällige Meldung auf der Anzeige 12 angezeigt, die darüber informiert, dass noch andere Freischaltungen aktiv sind und eine Normalisierung nicht erfolgen darf.

Nachdem sichergestellt ist, dass es sich um die richtige Komponente handelt und die Normalisierung auch durchgeführt werden darf, wird die Komponente wieder in den normalen Zustand gebracht, d.h. sie wird beispielsweise durch Drücken eines Schalters oder Drehen einer Kurbel zugeschaltet. Die Durchführung der Maßnahme wird durch Betätigen einer Schaltfläche auf der mobilen Schreib-Lese-Einheit 3 und anschließendes Anhalten der Schreib-Lese-Einheit 3 an den Transponder 2 der Komponente bestätigt. Bei diesem Vorgang löscht die Schreib-Lese-Einheit 3 die entsprechende Zustands-/Betriebsinformationseinheit, die im Speicherelement 10 gespeicherte ist. Der Transponder 2 legt diese Informationen dauerhaft in seinem Speicherelement 10 ab. Als Reaktion auf die Datenübertragung aktualisiert der Transponder 2 die optische Anzeigeeinheit 6. Das auffällige Symbol 13 wird weiterhin angezeigt, wenn weitere Freischaltungen aktiv sind, ansonsten verschwindet es. Die Anzahl gleichzeitig aktiver Freischaltvorgänge wird als Zahl aktualisiert und gibt hierdurch dem Anwender eine visuelle Rückmeldung. Der aktuelle Zustand der Freischaltungen ist somit weiterhin jedem optisch zugänglich. Ein Schreib-Lese-Gerät 3 ist hierzu nicht erforderlich, um die in den Figuren 3 und 4 dargestellte Anzahl von aktiven Freischaltzuständen zu erkennen.

Nach Abschluss der Normalisierungen werden die Bestätigungen von der mobilen Schreib-Lese-Einheit 3 an das zentrale EDV-System 4 übertragen. Analog zum Vorgehen bei der Freischaltung verfolgt das EDV-System 4 die durchgeführten Normalisierungen und signalisiert, welche Normalisierungen noch ausstehen bzw. für welche Freischaltvorgänge die Normalisierung komplett abgeschlossen wurde.

Die Erfindung ist aber nicht nur bei einem wie vorstehend beschriebenen Freischaltungsprozesses von Komponenten einer großtechnischen Anlage einsetzbar, sondern kann auch für andere optisch anzuzeigende Maßnahmen eingesetzt werden, was eine Steigerung der Zuverlässigkeit in der Ausführung und einen wesentlichen Zugewinn an Arbeits- und Produktionssicherheit gewährleistet. Der Transponder 2 ist dabei wiederum an der Komponente selbst oder an einem für die Maßnahme geeigneten Ort angebracht.

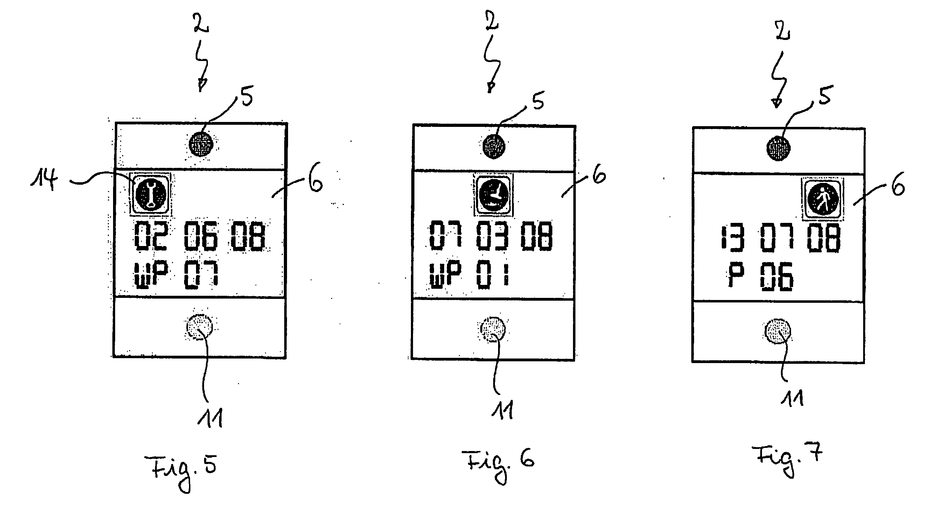

In Fig. 5 zeigt die optische Anzeigeeinheit 6 des Transponders 2 eine zuletzt durchgeführte Wartung einer Komponente einer großtechnischen Anlage an. Dabei wird auf der optischen Anzeige 6 ein Symbol 14 eingeblendet, welches für eine Wartungsmaßnahme steht. Die weitere auf der optischen Anzeige 6 dargestellte Information gibt das Datum der zuletzt durchgeführten Wartungsmaßnahme wieder. Äquivalent zum Prozess der Freischaltung wird von dem zentralen EDV-System 4 ein Wartungsplan erstellt und abgearbeitet. Nach Abarbeitung wird dies auf der Schreib-Lese-Einheit 3 gespeichert, in dem die entsprechende Zustands-/Betriebsinformationseinheit vom Benutzer der Schreib-Lese-Einheit 3 geändert wird. Diese geänderte Zustands-/Betriebsinformationseinheit wird nach Abschluss der Wartungsarbeiten an den Transponder 2 übertragen, der dann das eingeblendete Datum der zuletzt durchgeführten Wartung aktualisiert. Als weitere Information ist in Fig. 5 der entsprechende Wartungsplan "WP 07" auf der optischen Anzeigeeinheit 6 dargestellt, da zur Wartung einer Komponente oder Maschine einer großtechnischen Anlage mehrere Wartungspläne gehören. In dem dargestellten Fall wurde demnach zuletzt am 02.06.2008 eine Wartung nach Wartungsplan "WP 07" durchgeführt.

In Fig. 6 zeigt die optische Anzeigeeinheit 6 des Transponders 2 eine zuletzt durchgeführte behördliche Prüfung (TÜV) der Komponente an, wohingegen in Fig. 7 eine zuletzt durchgeführte Messwertaufnahme von der Komponente angezeigt wird. Eine Änderung der in Fig. 6 und Fig. 7 dargestellten Informationen erfolgt in identischer Weise wie bei der zuvor beschriebenen Maßnahme einer zuletzt durchgeführten Wartung, so dass auf die diesbezüglich vorstehenden Ausführungen verwiesen wird.

## Patentansprüche

1. Transponder (2) mit
• einem Empfangselement (7),
• einem Sendeelement (8),
• einer optischen Anzeigeeinheit (6), und
• einem Steuerelement (9), das mit dem Empfangselement (7), dem Sendeelement (8) und der optischen Anzeigeeinheit (6) verbunden ist und ein Speicherelement (10) aufweist,
wobei in dem Speicherelement (10) eine Transponder-Identifizierungsinformationseinheit dauerhaft gespeichert ist und mehrere Zustands-/Betriebsinformationseinheiten, die eine dem Transponder (2) zugeordnete Komponente betreffen, speicherbar sind,
wobei die Transponder-Identifizierungsinformationseinheit und die Zustands-/Betriebsinformationseinheiten über das Sendeelement (8) aus dem Speicherelement (10) gelesen werden können, und die Zustands-/Betriebsinformationseinheiten über das Empfangselement (7) dem Speicherelement (10) zugeführt werden können,
wobei der Transponder (2) so ausgelegt ist, dass zumindest ein Teil der in den Zustands-/Betriebsinformationseinheiten enthaltenen Information auf der optischen Anzeigeeinheit (6) darstellbar ist,
wobei der Transponder an einer Komponente einer großtechnischen Anlage angeordnet ist,
wobei die in dem Speicherelement (10) speicherbaren Zustands-/Betriebsinformationseinheiten jeweils eine Information hinsichtlich eines Zu- oder Abschaltungszustands der Komponente und/oder einer zuletzt durchgeführten Wartung der Komponente und/oder einer zuletzt durchgeführten behördlichen Prüfung der Komponente und/oder einer zuletzt durchgeführten Messwertaufnahme der Komponente umfassen, und
wobei bei einer Anzahl der Zustands-/Betriebsinformationseinheiten größer Null mittels des Steuerelements (9) ein Warnsignal auf der optischen Anzeigeeinheit (6) einblendbar ist.

2. Transponder (2) nach Anspruch 1, wobei die optische Anzeigeeinheit (6) lediglich die Anzahl der Zustands-/Betriebsinformationseinheiten, nicht jedoch die Zustands-/Betriebsinformationseinheit selbst darstellt.

3. Transponder (2) nach Anspruch 1 oder 2, wobei die optische Anzeigeeinheit (6) eine Anzeige auf Basis von elektronischer Tinte mit bistabilen Anzeigelementen ist.

4. Transponder (2) nach einem der vorhergehenden Ansprüche, wobei der Transponder (2) ein RFID-Transponder ist.

5. Kommunikationssystem mit
• einem Transponder (2) nach einem der Ansprüche 1 bis 4, und
• einer Schreib-Lese-Einheit (3), in der zumindest eine Zustands-/Betriebsinformationseinheit und zumindest eine Identifizierungsinformationseinheit speicherbar ist,
wobei jeder Identifizierungsinformationseinheit wenigstens eine Zustands-/Betriebsinformationseinheit zugeordnet ist, von der Schreib-Lese-Einheit (3) die Transponder-Identifizierungsinformationseinheit aus dem Speicherelement (10) des Transponders (2) auslesbar ist und die Schreib-Lese-Einheit (3) in Abhängigkeit der ausgelesenen Transponder-Identifizierungsinformationseinheit zumindest eine Zustands-/Betriebsinformationseinheit von der Schreib-Lese-Einheit (3) auf den Transponder (2) übertragen kann.

6. Kommunikationssystem nach Anspruch 5, wobei der Inhalt der wenigstens einen Zustands-/Betriebsinformationseinheit, die in der Schreib-Lese-Einheit (3) gespeichert ist, vor der Übertragung auf den Transponder (2) von einem Benutzer der Schreib-Lese-Einheit (3) veränderbar ist.

7. Kommunikationssystem nach Anspruch 5 oder 6, wobei die Schreib-Lese-Einheit (3) dazu ausgelegt ist, die vom Transponder (2) ausgelesene Transponder-Identifizierungsinformationseinheit mit der zumindest einen in der Schreib-Lese-Einheit (3) gespeicherten Identifizierungsinformationseinheit zu vergleichen.

8. Kommunikationssystem nach Anspruch 7, wobei bei Übereinstimmung des Inhalts der Transponder-Identifizierungsinformationseinheit und einer Identifizierungsinformationseinheit die Schreib-Lese-Einheit (3) im Transponder (2) gespeicherte Zustands-/Betriebsinformationseinheiten ausliest, und/oder eine der Identifizierungsinformationseinheit zugeordnete, in der Schreib-Lese-Einheit (3) gespeicherte Zustands-/Betriebsinformationseinheit von der Schreib-Lese-Einheit (3) auf den Transponder (2) überträgt.

9. Kommunikationssystem nach Anspruch 7 oder 8, wobei bei Übereinstimmung des Inhalts der Transponder-Identifizierungsinformationseinheit und einer Identifizierungsinformationseinheit die Schreib-Lese-Einheit (3) ein Steuersignal an den Transponder (2) sendet, welches das Steuerelement (9) dazu veranlasst, eine im Speicherelement (10) gespeicherte Zustands-/Betriebsinformationseinheit zu löschen.

10. Informationssystem (1) mit
• einem Kommunikations-System nach einem der Ansprüche 5 bis 9, und
• einem zentralen EDV-System (4),
wobei zumindest die in der Schreib-Lese-Einheit (3) gespeicherten Zustands-/Betriebsinformationseinheiten von dem zentralen EDV-System (4) aus der Schreib-Lese-Einheit (3) auslesbar sind, und in der Schreib-Lese-Einheit (3) zu speichernde Zustands-/Betriebsinformationseinheiten von dem zentralen EDV-System (4) auf die Schreib-Lese-Einheit (3) übertragbar sind.

11. Informationssystem (1) nach Anspruch 10, wobei das zentrale EDV-System (4) dazu ausgelegt ist, von der Schreib-Lese-Einheit (3) ausgelesene Zustands-/Betriebsinformationseinheiten zu verarbeiten, insbesondere mit in dem EDV-System (4) gespeicherten Zustands-/Betriebsinformationseinheiten zu vergleichen.

12. Verwendung eines Transponders (2) nach einem der Ansprüche 1 bis 4 oder eines Kommunikationssystems nach einem der Ansprüche 5 bis 9 oder eines Informationssystems (1) nach Anspruch 10 oder 11 zur optisch erfassbaren Anzeige von zumindest einem Teil einer in den Zustands-/Betriebsinformationseinheiten enthaltenden Information einer Komponente einer großtechnischen Anlage, insbesondere eines Kraftwerks, wobei der Transponder (2) an oder in der Nähe der Komponente oder an einer dieser Komponente zugeordneten Schalt- oder Messstelle angeordnet ist.

13. Verfahren zum Betreiben eines einen Transponder (2) nach einem der Ansprüche 1 bis 4 aufweisenden Informationssystems (1), wobei
über das Empfangselement (7) in dem Speicherelement (10) zumindest eine Zustands-/Betriebsinformationseinheit gespeichert wird und
auf der optischen Anzeigeeinheit (6) zumindest ein Teil der in den Zustands-/Betriebsinformationseinheiten enthaltenen Information dargestellt wird.

## Claims

1. A transponder (2) including:
- a receiver element (7),
- a transmitter element (8),
- a visual display unit (6), and
- a control element (9), which is connected to the receiver element (7), the transmitter element (8) and the visual display unit (6), and provides a buffer element (10),
wherein a transponder identification-information unit is permanently buffered in the buffer element (10), and several status/operating-information units, which relate to a component associated with the transponder (2), can be buffered,
wherein the transponder identification-information units and the status/operating-information units can be read out from the buffer element (10) via the transmitter element (8), and
the status/operating-information units can be supplied to the buffer element (10) via the receiver element (7),
wherein the transponder (2) is embodied in such a manner that at least a part of the information contained in the status/operating-information units can be displayed on the visual display unit (6), wherein the transponder is arranged on a component of a industrial-scale plant,
wherein the status/operating-information units capable of being buffered in the buffer element (10) each comprise an information regarding a switched-on or switched-off status of the component and/or a last-implemented servicing of the component and/or a last-implemented official testing of the component and/or a last-implemented recording of a measured-value of the component, and wherein, with a number of status/operating-information units greater than zero, a warning signal can be flashed onto the visual display unit (6) by means of the control element (9).

2. The transponder (2) according to claim 1,
wherein the visual display unit (6) displays only the number of status/operating-information units, but not the status/operating-information unit itself.

3. The transponder (2) according to claim 1 or 2, wherein the visual display unit (6) is a display based on electronic ink with bi-stable display elements.

4. The transponder (2) according to any one of the preceding claims, wherein the transponder (2) is an RFID transponder.

5. A communications system including
- a transponder (2) according to any one of claims 1 to 4, and
- a read-write unit (3), in which at least one status/operating-information unit and at least one identification-information unit can be buffered, wherein each identification-information unit is associated with at least one status/operating-information unit; the transponder identification-information unit can be read out from the buffer element (10) of the transponder (2) by the read-write unit (3); and, dependent upon the read-out transponder identification-information unit, the read-write unit (3) can transmit at least one status/operating-information unit from the read-write unit (3) to the transponder (2).

6. The communications system according to claim 5,
wherein the content of the at least one status/operating-information unit, which is buffered in the read-write unit (3), can be varied by a user of the read-write unit (3) before transmission to the transponder (2).

7. The communications system according to claim 5 or 6, wherein the read-write unit (3) is embodied in order to compare the transponder identification-information unit read out from the transponder (2) with the at least one identification-information unit buffered in the read-write unit (3).

8. The communications system according to claim 7, wherein, in the case of an agreement of the content of the transponder identification-information unit and an identification-information unit, the read-write unit (3) reads out status/operating-information units buffered in the transponder (2), and/or transmits a status/operating-information unit associated with the identification-information unit and buffered in the read-write unit (3) to the transponder (2).

9. The communications system according to claim 7 or 8, wherein, in the case of an agreement of the content of the transponder identification-information unit and an identification-information unit, the read-write unit (3) transmits a control signal to the transponder (2), which causes the control element (9) to delete a status/operating-information unit buffered in the buffer element (10).

10. An information system (1) including
- a communications system according to any one of claims 5 to 9, and
- a central data-processing system (4),
wherein at least the status/operating-information units buffered in the read-write unit (3) can be read out from the read-write unit (3) by the central data-processing system (4), and status/operating-information units to be buffered in the read-write unit (3) can be transmitted to the read-write unit (3) by the central data-processing system (4).

11. The information system (1) according to claim 10, wherein the central data-processing system (4) is embodied in such a manner that it can process status/operating-information units read out by the read-write unit (3) and especially compare the latter with status/operating-information units buffered in the data-processing system (4).

12. A use of a transponder (2) according to any one of claims 1 to 4 or of a communications system according to any one of claims 5 to 9 or of an information system (1) according to claim 10 or 11 for the visually readable display of at least a part of an information contained in the status/operating-information units of a component of a industrial-scale plant, especially of a power station,
wherein the transponder (2) is arranged on or in the proximity of the component or on a switching or measuring station associated with this component.

13. A method for operating an information system (1) comprising a transponder (2) according to any one of claims 1 to 4, wherein
at least one status/operating-information unit is buffered in the buffer element (10) via the receiver element (7) and
at least one part of the information contained in the status/operating-information units is displayed on the visual display unit (6).

## Revendications

1. Transpondeur (2), comprenant :
• un élément de réception (7),
• un élément d'émission (8),
• une unité d'affichage optique (6), et
• un élément de commande (9), qui est connecté à l'élément de réception (7), à l'élément d'émission (8) et à l'unité d'affichage optique (6) et qui présente un élément de mémoire (10),
dans lequel, dans l'élément de mémoire (10), une unité d'informations d'identification de transpondeur est mémorisée de manière durable, et plusieurs unités d'information d'état de fonctionnement, concernant un composant affecté au transpondeur (2), peuvent être mémorisées,
dans lequel l'unité d'information d'identification de transpondeur et les unités d'information d'état de fonctionnement peuvent être lues via l'élément d'émission (8) dans l'élément de mémoire (10), et les unités d'information d'état de fonctionnement peuvent être acheminées via l'élément de réception (7) à l'élément de mémoire (10),
dans lequel le transpondeur (2) est conçu de sorte qu'au moins une partie des informations contenues dans les unités d'information d'état de fonctionnement puisse être représentée sur l'unité d'affichage optique (6),
dans lequel le transpondeur est agencé sur un composant d'une installation à échelle industrielle,
dans lequel les unités d'information d'état de fonctionnement mémorisables dans l'élément de mémoire (10) comprennent respectivement une information concernant un état d'activation ou de désactivation du composant et/ou le dernier entretien du composant effectué et/ou un contrôle administratif du composant le dernier effectué et/ou le dernier enregistrement de valeur de mesure du composant effectué, et
dans lequel, lorsqu'un nombre d'unités d'information d'état de fonctionnement est plus grand que zéro, un signal d'avertissement peut être affiché sur l'unité d'affichage optique (6) au moyen de l'élément de commande (9).

2. Transpondeur (2) selon la revendication 1, dans lequel l'unité d'affichage optique (6) présente uniquement le nombre d'unités d'information d'état de fonctionnement, mais pas les unités d'information d'état de fonctionnement elles-mêmes.

3. Transpondeur (2) selon la revendication 1 ou 2, dans lequel l'unité d'affichage optique (6) est un affichage à base d'une encre électronique avec des éléments d'affichage bistables.

4. Transpondeur (2) selon l'une quelconque des revendications précédentes, dans lequel le transpondeur (2) est un transpondeur RFID.

5. Système de communication, comprenant :
• un transpondeur (2) selon l'une quelconque des revendications 1 à 4 et
• une unité de lecture-écriture (3), dans laquelle au moins une unité d'information d'état de fonctionnement et au moins une unité d'information d'identification peuvent être mémorisées,
dans lequel il est affecté à chaque unité d'information d'identification au moins une unité d'information d'état de fonctionnement, l'unité d'information d'identification de transpondeur provenant de l'élément de mémoire (10) du transpondeur (2) peut être lue par l'unité de lecture-écriture (3) et l'unité de lecture-écriture (3) peut transmettre, en fonction de l'unité d'informations d'identification de transpondeur lue, au moins une unité d'informations d'état/fonctionnement de l'unité de lecture-écriture (3) sur le transpondeur (2).

6. Système de communication selon la revendication 5, dans lequel le contenu de la au moins une unité d'information d'état de fonctionnement, qui est mémorisée dans l'unité de lecture-écriture (3), peut être modifié par un utilisateur de l'unité de lecture-écriture (3) avant transmission au transpondeur (2).

7. Système de communication selon la revendication 5 ou 6, dans lequel l'unité de lecture-écriture (3) est conçue pour comparer l'unité d'information d'identification de transpondeur lue depuis le transpondeur (2) à la au moins une unité d'information d'identification mémorisée dans l'unité de lecture-écriture (3).

8. Système de communication selon la revendication 7, dans lequel, dans le cas d'une correspondance du contenu de l'unité d'information d'identification de transpondeur et d'une unité d'information d'identification, l'unité de lecture-écriture (3) lit des unités d'information d'état de fonctionnement mémorisées dans le transpondeur (2) et/ou transmet au transpondeur (2) une unité d'information d'état de fonctionnement, affectée à l'unité d'information d'identification et mémorisée dans l'unité de lecture-écriture (3), depuis l'unité de lecture-écriture (3).

9. Système de communication selon la revendication 7 ou 8, dans lequel, dans le cas d'une correspondance du contenu de l'unité d'information d'identification de transpondeur et d'une unité d'information d'identification, l'unité de lecture-écriture (3) envoie au transpondeur (2) un signal de commande qui contraint l'élément de commande (9) à supprimer une unité d'information d'état de fonctionnement mémorisée dans l'élément de mémoire (10).

10. Système d'information (1), comprenant :
• un système de communication selon l'une quelconque des revendications 5 à 9, et
• un système informatique central (4),
dans lequel au moins les unités d'information d'état de fonctionnement mémorisées dans l'unité de lecture-écriture (3) peuvent être lues par le système informatique central (4) dans l'unité de lecture-écriture (3), et des unités d'information d'état de fonctionnement à mémoriser dans l'unité de lecture-écriture (3) peuvent être transmises par le système informatique central (4) à l'unité de lecture-écriture (3).

11. Système d'information (1) selon la revendication 10, dans lequel le système informatique central (4) est conçu pour traiter des unités d'information d'état de fonctionnement lues par l'unité de lecture-écriture (3), en particulier pour les comparer à des unités d'informations d'état/fonctionnement mémorisées dans le système informatique central (4).

12. Utilisation d'un transpondeur (2) selon l'une quelconque des revendications 1 à 4 ou d'un système de communication selon l'une quelconque des revendications 5 à 9 ou d'un système d'information (1) selon la revendication 10 ou 11 pour un affichage à saisie optique d'au moins une partie d'une information contenue dans les unités d'information d'état de fonctionnement d'un composant d'une installation à échelle industrielle, en particulier d'une centrale électrique, dans laquelle le transpondeur (2) est agencé sur ou à proximité du composant ou en un point de commutation ou de mesure affecté à ce composant.

13. Procédé pour faire fonctionner un système d'information (1) présentant un transpondeur (2) selon l'une quelconque des revendications 1 à 4, dans lequel :
par le biais de l'élément de réception (7), dans l'élément de mémoire (10), il est mémorisé au moins une unité d'information d'état de fonctionnement, et
sur l'unité d'affichage optique (6), il est présenté au moins une partie de l'information contenue dans les unités d'information d'état de fonctionnement.
